# EUROPÄISCHE PATENTSCHRIFT

(11) **EP 2 400 190 B1**
(45) Veröffentlichungstag und Bekanntmachung des Hinweises auf die Patenterteilung: **12.08.2015**
(21) Anmeldenummer: 11005048.1
(22) Anmeldetag: 21.06.2011
(51) Int. Cl.: F16K 5/06, F16K 27/06

(54) **Drehkegelventil**
Rotary plug valve
Soupape à cône rotatif

(30) Priorität: 23.06.2010 DE 102010024720
(43) Veröffentlichungstag der Anmeldung: 28.12.2011
(73) Patentinhaber: Vetec Ventiltechnik GmbH, 67346 Speyer (DE)
(72) Erfinder: Hock, Norbert, 67354 Römerberg (DE)
(74) Vertreter: Kesselhut, Wolf

(56) Entgegenhaltungen:
- US-A- 3 379 408
- US-A- 3 475 003
- US-A- 4 822 000
- US-B1- 6 378 842

## Beschreibung

Die Erfindung betrifft ein Drehkegelventil für die Regelung flüssiger oder gasförmiger Stoffströme in Rohrleitungen gemäß dem Oberbegriff von Anspruch 1, wie es beispielsweise aus Dokument US-A-6 378 842 bekannt ist.

Drehkegelventile mit exzentrisch gelagerten Drehkegeln sind in unterschiedlichen Ausführungen bekannt. Alle diese Drehkegelventile haben ein einteiliges Gehäuse, das eine seitliche Bohrung zur Aufnahme der Lager und Dichtelemente sowie für die Durchführung der Antriebswelle nach außen aufweist.

Zur Montage der bekannten Drehkegelventile wird der Drehkegel bekanntermaßen in ausgebautem Zustand des Gehäuses durch die axiale Mittelbohrung des Gehäuses in den Innenraum eingeführt und dort so ausgerichtet, dass die durch die seitliche Bohrung des Gehäuses eingeschobene Antriebswelle mit dem Drehkegel verbunden werden kann. Anschließend wird der mit dem Drehkegel zusammenwirkende Sitzring montiert.

Diese Vorgehensweise ist sehr zeitaufwändig und erfordert fachmännisches Geschick, da die Antriebswelle spielfrei und passgenau in den Drehkegel getrieben werden muss. Durch die zuvor beschriebene Konstruktion ergibt sich das Problem, dass im Falle von Reparatur- und/oder Wartungsarbeiten die komplette Demontage des in einer Rohrleitung verbauten Drehkegelventils erforderlich ist, da die verschleißbeanspruchten Innenteile im eingebauten Zustand nicht zugänglich sind. Dies hat zur Folge, dass der jeweilige Abschnitt der Rohrleitung - sofern dieser umflossen werden kann - oder unter Umständen das ganze Rohrleitungssystem aufgrund der zeitaufwändigen Arbeiten über einen längeren Zeitraum hinweg still gelegt werden muss.

Weiterhin ist es bekannt, bei Armaturen, deren Stellorgane im Gegensatz zu Drehkegelventilen insbesondere als Hubventile ausgestaltet sind, deren Kegel linear bewegt werden, zweigeteilte Gehäuse einzusetzen die in Bewegungsrichtung des im Ventil verschiebbar angeordneten Schiebers geöffnet werden können. Je nach Anwendungsfall werden sowohl Hubventile als auch Drehkegelventile allgemein für Regelaufgaben eingesetzt, wobei der Einsatz von Hubventilen aber bislang hauptsächlich dort erfolgt, wo in Folge relativ hoher Differenzdrücke erosive Beanspruchungen zu erwarten sind. Während eines Anlagenstillstands zwecks turnusgemäßen Revisions- und Wartungsarbeiten besteht an besonders wichtigen Regelventilen die Möglichkeit, die Ventile zu öffnen und die strömungsrelevanten Drosselstellen, d. h. primär die Drosselkörper, zu inspizieren und - wenn notwendig - zu ersetzen.

Obgleich danach zwar ggf. die ventileigene Dichtung erneuert werden muss, ist es hierbei von Vorteil, dass das primäre Ventilgehäuse in der Rohrleitung verbleibt. Es sind keine neuen Verbindungsteile und keine diesbezüglichen Arbeiten und Prüfungen der beidseitigen Flanschverbindungen zur Rohrleitung notwendig. Allerdings ist es bei den Drehkegelventilen des Standes der Technik bisher nicht bekannt, das Gehäuse zweigeteilt auszugestalten, so dass die Ventile im Falle einer Funktionsstörung vollständig aus der zugehörigen Rohrleitung entfernt werden müssen.

Gegenüber den zuvor genannten Hubventilen bieten die Drehkegelventile sowohl die regelungstechnischen Vorteile der größeren Stellbereiche und der höheren Durchflussleistung, als auch eine funktionell bessere Dichtung an der Durchführung der Antriebswelle nach außen. Ein weiterer Vorteil ist dadurch gegeben, dass die Kinematik des exzentrisch gelagerten Drehkegels eine Verstärkung der Stellkraft ergibt, die dem beim Absperren des Durchflusses ansteigenden Differenzdruck entgegenwirkt, wodurch die erforderlichen Stellkräfte relativ niedrig sind und die Bemessung des Antriebs entsprechend günstig gewählt werden kann.

Demgemäß ist es eine Aufgabe der vorliegenden Erfindung, ein Drehkegelventil zu schaffen, das eine kompakte Bauform besitzt und das eine einfache Montage sowie auch Revision ermöglicht, ohne dass das gesamte Ventil hierzu vom zugehörigen Rohrleitungssystem demontiert werden muss.

Diese Aufgabe wird erfindungsgemäß durch ein Drehkegelventil mit den Merkmalen von Anspruch 1 gelöst. Durch die erfindungsgemäße Lösung eröffnet sich die Möglichkeit, ein Drehkegelventil zu schaffen, das auch in Anwendungsfällen eingesetzt werden kann, die bisher hauptsächlich den Hubventilen vorbehalten waren.

Weitere Merkmale der Erfindung sind in den Unteransprüchen enthalten.

Gemäß der Erfindung umfasst ein Drehkegelventil mit einem in einem Gehäuse drehbeweglich angeordneten Drehkegel, dessen kugelkalottenförmige Oberfläche mit einer im Gehäuse angeordneten Dichtfase zusammenarbeitet, wobei insbesondere in der geschlossenen Stellung die Mitte der Kugelkalotte auf der Mittenachse der Dichtfase anliegt und die Drehachse des Drehkegels in einem ersten Abstand zur Mittenachse des Dichtkreises und in einem zweiten Abstand zur Schnittebene des Dichtkreises angeordnet ist, ein Gehäuse, das aus einem ersten Gehäuseteil und einem zweiten Gehäuseteil besteht. Der erste Gehäuseteil weist eine Öffnung auf, durch die hindurch der Drehkegel zusammen mit der zugehörigen Antriebswelle als Einheit in den ersten Gehäuseteil einführbar ist. Nach dem Einführen des Drehkegels mit der daran befestigten Antriebswelle als Einheit wird die Öffnung durch den zweiten Gehäuseteil verschlossen, der hierzu mit dem ersten Gehäuseteil insbesondere unter Einsatz einer zwischen den Gehäuseteilen angeordneten umlaufenden Dichtung bevorzugt verschraubt wird.

Das erfindungsgemäße Drehkegelventil besitzt den Vorteil, dass dessen Montage in einem Rohrleitungssystem in vorteilhafter Weise dadurch vereinfacht wird, dass die Einzelteile des Drehkegelventils zuvor als Baugruppen montiert werden können. Das passgenaue Eintreiben der Antriebswelle in den Drehkegel, die sich durch den zweiten Gehäuseteil und eine in diesem angeordnete Öffnung hindurch erstreckt, die in kostengünstiger Weise zuverlässig durch eine Dichtung, z.B. eine bekannte Flachdichtung, abgedichtet wird, kann in vorteilhafter Weise in einer Werkstatt, insbesondere auch maschinell, durchgeführt werden, wodurch sich die Montagegenauigkeit erhöhen und der für die Montage benötigte Zeitaufwand reduzieren lassen.

Weiterhin ergibt sich der Vorteil, dass Verschleißteile innerhalb des Ventils, wie beispielsweise der Drehkegel, oder der im ersten Gehäuseteil angeordnete Sitzring in kürzester Zeit ausgetauscht werden können, da hierzu lediglich der zweite Gehäuseteil mit dem Drehkegel und der Antriebswelle vom ersten Gehäuseteil abgenommen werden muss, um Zugang zu den jeweiligen Verschleißteilen zu erhalten. Der erste Gehäuseteil kann hierbei in der Rohrleitung montiert bleiben, so dass auch eine erneute Abdichtung des ersten Gehäuseteils gegenüber der Rohrleitung in vorteilhafter Weise entfällt.

Die Form, bzw. die Kontur der Öffnung des ersten Gehäuseteils entspricht dabei der Projektion des Drehkegels in Richtung der Drehachse der Antriebswelle, wobei die Öffnung geringfügig größer als die koaxial zur Antriebswelle gerichtete Projektion des Drehkegels auf eine parallel zur Öffnung und senkrecht zur Antriebswelle verlaufende Ebene ist, so dass der Drehkegel mit einem Spaltabstand von z.B. 1 mm oder mehr durch die Öffnung hindurch in den ersten Gehäuseteil eingeführt werden kann. Die Kontur der Öffnung kann hierbei insbesondere die Form einer Birne besitzen, wobei sich die Längsachse der Birne bevorzugt senkrecht zur Durchflussachse des Ventils, bzw. im Wesentlichen parallel zu den Flächen der beiden seitlich neben der Öffnung angeordneten Anschlussflansche des Ventils erstreckt, die am ersten Gehäuseteil bevorzugt integral mit diesem geformt sind.

Hierdurch ergibt sich der Vorteil, dass die äußeren Abmessungen des ersten Gehäuseteils bei einer vorgegebenen Größe des Drehkegels minimal gehalten werden können, da die Öffnung im ersten Gehäuseteil - und damit der erste Gehäuseteil selbst - lediglich geringfügig größer als der Drehkegel sein muss.

Gemäß der bevorzugten Ausführungsform des erfmdungsgemäßen Drehkegelventils ist der Drehkegel in vorteilhafter Weise als Kalotte mit zwei Schwenkarmen ausgebildet, wobei der erste Schwenkarm einen Lagerzapfen aufweist, der im ersten Gehäuseteil drehbar gelagert ist, und der zweite Schwenkarm über eine passgenaue und formschüssige Verbindung mit der Antriebswelle verbunden ist, die bevorzugt drehbar im zweiten Gehäuseteil in einer Lagerbuchse gelagert ist, die sich bei eingesetztem Drehkegel bevorzugt bis an den zweiten Schwenkarm im ersten Gehäuseteil heran erstreckt. Der Lagerzapfen ist hierbei fluchtend zur Drehachse der Antriebswelle angeordnet. Durch diese Anordnung ergibt sich der Vorteil, dass die Antriebswelle und der damit verbundene Drehkegel sehr präzise im ersten und zweiten Gehäuseteil gelagert sind. Die freie Flächen zwischen den Schwenkarmen ist daher in vorteilhafter Weise so bemessen, dass bei Offenstellung des Drehkegels die maximale Durchflussleistung nicht behindert wird.

Weiterhin kann es vorgesehen sein, dass die beiden Anschlussflansche, die nachfolgend auch als Gehäuseflansche des ersten Gehäuseteils bezeichnet werden, jeweils einen seitlich der Öffnung in geringem Abstand von z.B. 1 mm zu dieser angeordneten verdickten Bereich aufweisen, der insbesondere mit einem Innengewinde zur Aufnahme von Befestigungsbolzen oder anderen Verbindungsmitteln versehen ist, über die der zweite Gehäuseteil am ersten Gehäuseteil lösbar befestigt wird. Die beiden verdickten Bereiche liegen hierbei bevorzugt in Höhe des Übergangsbereichs zwischen dem bauchigen Abschnitt und dem verjüngten schmaleren Kopfabschnitt der birnenartigen Kontur der Öffnung, wodurch eine ausreichende Materialstärke zur Aufnahme der wirkenden Kräfte erhalten wird.

Bei dieser Ausführungsform der Erfindung sind auf der Längsachse der Kontur zu beiden Seiten der Öffnung zwei weitere Aufnahmebohrungen vorgesehen, die in entsprechende Verdickungen des ersten Gehäuseteils eingebracht sind und zur Aufnahme von zwei weiteren Befestigungsschrauben oder sonstigen Verbindungselementen dienen, über die der ersten und zweite Gehäuseteil miteinander verbunden werden können. Durch die Möglichkeit der Verschraubung des ersten Gehäuseteils mit dem zweiten Gehäuseteil an insgesamt vier Verbindungspunkten, die jeweils auf zwei senkrecht zueinander verlaufenden gedachten Linien angeordnet sind, wird in besonders vorteilhafter Weise die Möglichkeit geschaffen, bei einer vorgegebenen Baulänge des Gehäuses die Anpresskraft über den Umfang der Anlageflächen zwischen dem ersten und dem zweiten Gehäuseteil, zwischen denen bevorzugt eine entsprechende Dichtung angeordnet ist, gleichmäßig zu verteilen und dadurch eine verbesserte Dichtwirkung zu erreichen.

Die Drehachse der Antriebswelle liegt bei dieser Ausführungsform der Erfindung bevorzugt im verjüngten schmaleren Kopfabschnitt der Öffnung, wodurch sich bei einer vorgegebenen Baulänge des Gehäuses in vorteilhafter Weise eine symmetrische Anordnung der vier Befestigungspunkte ergibt, an denen der erste Gehäuseteil mit dem zweiten Gehäuseteil verbunden ist.

Gemäß einer weiteren Ausführungsform des erfindungsgemäßen Drehkegelventils kann der im ersten Gehäuseteil befestigte Sitzring, an welchem der Drehkegel in der geschlossenen Stellung des Ventils dichtend anliegt, wenigstens eine Ausnehmung aufweisen, in die ein Werkzeug einsteckbar ist. Hierdurch ergibt sich der Vorteil, dass sich der Sitzring bei der Montage mittels eines geeigneten Werkzeugs auf einfache Weise sicher halten und in den ersten Gehäuseteil einsetzen lässt.

Die Erfindung wird nachfolgend mit Bezug auf die Zeichnungen anhand einer bevorzugten Ausführungsform beschrieben.

In den Zeichnungen zeigt:
- Fig. 1: ein erfindungsgemäßes Drehkegelventil im Querschnitt zusammen mit einem Stellantrieb,
- Fig. 2: das Gehäuse des erfindungsgemäßen Drehkegelventils mit voneinander getrennten Gehäuseteilen in einer perspektivischer Ansicht,
- Fig. 3: eine Seitenansicht des Drehkegels mit der mit diesem verbundenen Antriebswelle,
- Fig. 4: eine Aufsicht auf den Drehkegel von Fig. 3, und
- Fig. 5: eine schematische räumliche Darstellung des Drehkegels beim Einbringen desselben zusammen mit der daran befestigten Antriebswelle durch die Öffnung hindurch in den ersten Gehäuseteil.

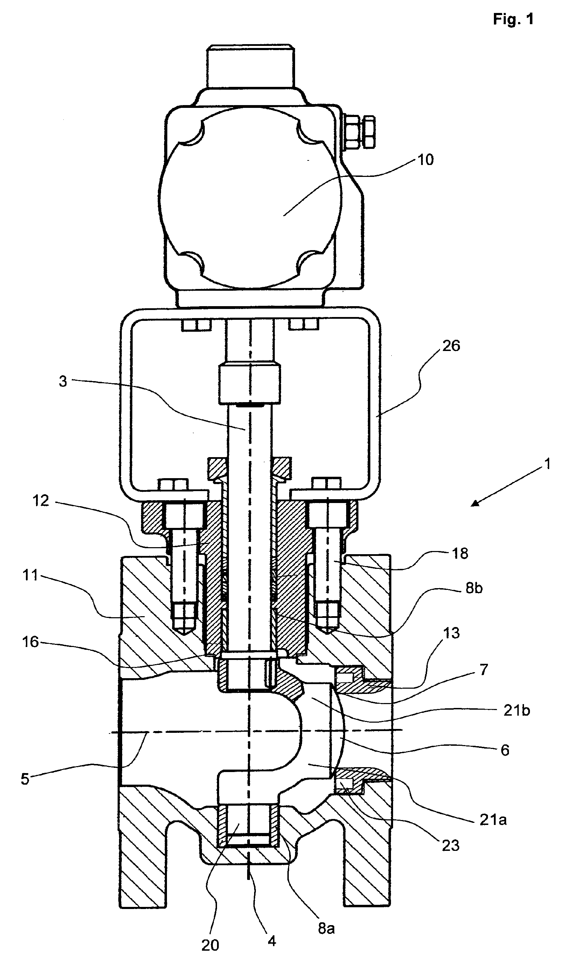

In Fig. 1 ist das erfindungsgemäße Drehkegelventil in zusammengebautem Zustand mit einem ersten Gehäuseteil 11, einem zweiten Gehäuseteil 12 und einem Stellantrieb 10 dargestellt. Der erste Gehäuseteil 11 und der zweite Gehäuseteil 12 sind durch Verbindungsmittel in Form von Bolzen oder Schrauben 18 miteinander verschraubt, wobei die Öffnung 17 im ersten Gehäuseteil 11 durch den zweiten Gehäuseteil 12 und die Dichtung 16 druckdicht verschlossen werden.

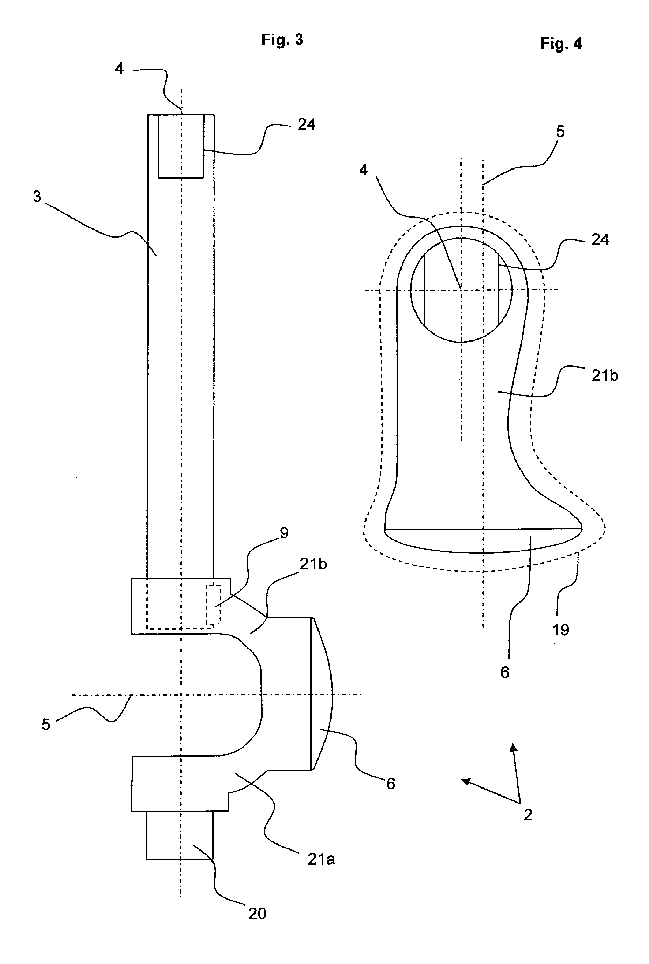

Wie der Darstellung von Fig. 1 weiterhin entnommen werden kann, ist ein Stellantrieb 10 bevorzugt über einen Abstandshalter 26 mit dem zweiten Gehäuseteil 12 verbunden, wobei der Stellantrieb 10 gemäß der Darstellung von Fig. 3 zur Übertragung des Stellwinkels über einen Eingriffsabschnitt 24, z.B. eine Passverzahnung, mit dem einen Ende der Antriebswelle 3 verbunden ist, welches aus dem zweiten Gehäuseteil 12 herausragt.

Die Antriebswelle 3 ist über eine Lagerbuchse 8b, sowie nicht näher bezeichnete Dichtmittel, wie z.B. einen O-Ring oder einen sonstigen Wellendichtring, innerhalb einer Durchführung für die Antriebswelle 3 im zweiten Gehäuseteil 12 gelagert und an ihrem dem Stellantrieb 10 gegenüber liegenden Ende durch einen Passsitz und ein Formschlusselement 9, beispielsweise eine Passfeder, drehfest mit dem Drehkegel 2 verbunden. Die Befestigung der Antriebswelle 3 am Drehkegel 2 erfolgt dabei bevorzugt an einem Schwenkarm 21b.

Wie weiterhin in Fig. 3 gezeigt ist, ist am Drehkegel 2 ein weiterer Schwenkarm 2 1 a geformt, der einen Lagerzapfen 20 trägt, welcher in einer Lagerbuchse 8a im ersten Gehäuseteil 11 drehbar gelagert ist. Der Schwenkarm 21 a erstreckt sich dabei symmetrisch zum Schwenkarm 21b, an welchem die Antriebswelle 3 angreift.

Gemäß der Darstellung von Fig. 1 wird die Winkelstellung des Drehkegels 2 durch den mit der Antriebswelle 3 über den Eingriffsabschnitt 24 gekoppelten Stellantrieb 10 verändert. Neben der geschlossenen Stellung, in welcher der Durchfluss des Mediums durch das nicht näher gezeigte Rohrsystem unterbrochen ist, und der vollständig geöffneten Stellung, in welcher das Medium das Drehkegelventil ungehindert durchströmen kann, lässt sich der Drehkegel 2 stufenlos in jede gewünschte Stellung bewegen, so dass sich jeder beliebige Öffnungsgrad des Drehkegelventils einstellen lässt.

Das in Fig. 1 gezeigte Drehkegelventil befindet sich in der geschlossenen Stellung, in welcher die Oberfläche der kugelförmigen Kalotte 6 unter Druck an die Dichtfase 7 angestellt wird und einen nicht näher dargestellten Dichtkreis bildet. Bei der bevorzugten Ausführungsfonn der Erfindung fällt die Mittenachse der kugelförmigen Kalotte 6 in der geschlossenen Stellung bevorzugt mit der Mittenachse 5 der Dichtfase 7 der Mittenachse des ersten Gehäuseteils 11, der daran angeschlossenen nicht näher gezeigten Rohrachse und der Strömungsrichtung des zu fördernden Mediums zusammen, wobei durch das Anliegen des Drehkegels 2 an der Dichtfase 7 das Ventil gegen einen Durchfluss des Mediums gesperrt wird.

Die Dichtfase 7 befindet sich an einem Sitzring 13, der beispielsweise mittels eines Gewindes im ersten Gehäuseteil 11 gehalten wird. An der Stirnseite des Sitzrings 13 des Drehkegelventils befinden sich Ausnehmungen 23, beispielsweise in Form von Bohrungen, durch die sich der Sitzring 13 bei der Montage leichter in den ersten Gehäuseteil 11 einsetzen und in diesem befestigen lässt.

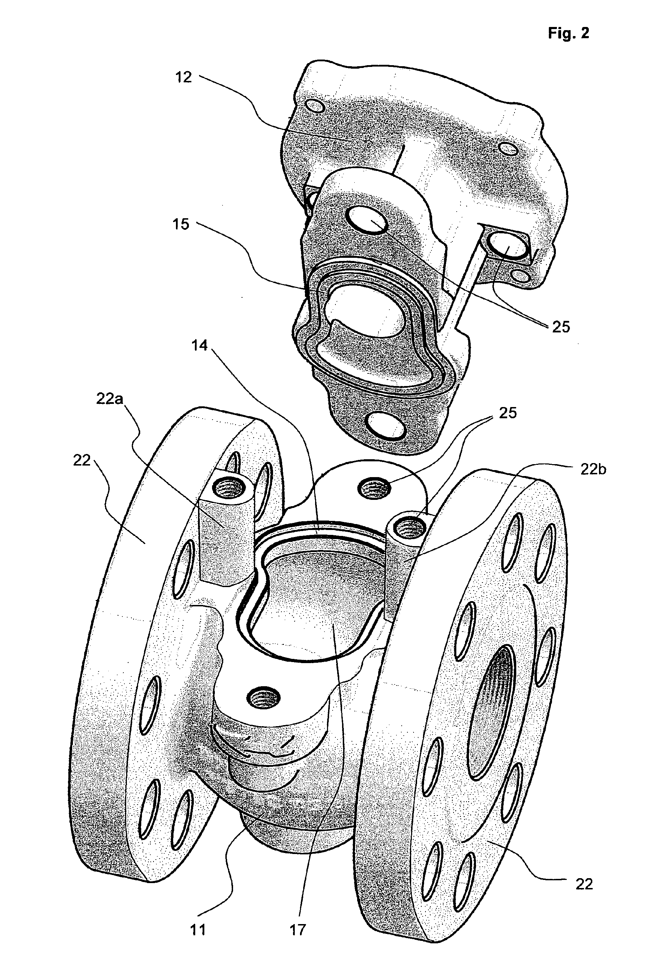

In der Darstellung von Fig. 2 ist das Gehäuse des erfindungsgemäßen Drehkegelventils mit voneinander getrennten Gehäuseteilen 11 und 12 in einer perspektivischen Ansicht gezeigt. Der Darstellung von Fig. 2 ist dabei zu entnehmen, dass die Öffnung 17 im ersten Gehäuseteil 11 zwischen den Anschlussflanschen 22 angeordnet und quer zur Durchflussrichtung des Mediums durch den ersten Gehäuseteil 11 ausgerichtet ist. Weiterhin ist der Darstellung von Fig. 2 zu entnehmen, dass die beiden Anschlussflansche 22 seitlich der Öffnung 17 verdickte Bereiche 22a und 22b aufweisen, in denen nicht näher bezeichnete Gewinde geformt sind, die die entsprechenden Gewindeabschnitte der Verbindungsmittel 18 aufnehmen, die die beiden Gehäuseteile 11 und 12 an den mit den Bezugsziffern 25 bezeichneten Verbindungsstellen lösbar miteinander verbinden.

Wie weiterhin der Darstellung von Fig. 2 im Detail entnommen werden kann, weist die Öffnung 17 im ersten Gehäuseteil 11 einen Rücksprung 14 auf, der mit einem an dem zweiten Gehäuseteil 12 vorgesehenen Vorsprung 15 zusammenwirkt, um die Öffnung 17 des ersten Gehäuseteils 11 beim Aufsetzen und Anpressen des zweiten Gehäuseteils 12 druckdicht zu verschließen. Zwischen dem bevorzugt als Dichtfläche ausgebildeten Rücksprung 14 und dem ebenfalls bevorzugt als Dichtfläche ausgebildeten Vorsprung 15 ist zu diesem Zweck eine umlaufende Dichtung 16 angeordnet. Der Vorsprung 15 und der Rücksprung 14 bilden hierbei in vorteilhafter Weise eine Zentrierpassung, die ein Verdrehen des zweiten Gehäuseteils 12 gegenüber dem ersten Gehäuseteil 11 verhindert und die beiden Gehäuseteile beim Zusammenfügen und Anziehen der Verbindungsmittel 18 relativ zueinander in der korrekten Position fixiert.

In der Darstellung von Fig. 4 ist die Antriebswelle 3 mit dem daran befestigten Drehkegel 2 in einer Draufsicht dargestellt. Dieser Darstellung kann im Detail entnommen werden, dass die Mittenachse 5 der Kalotte 6 des Drehkegels 2, welche in der geschlossenen Stellung mit der Mittenachse der Rohrleitung und dem ersten Gehäuseteil 11 übereinstimmt, seitlich beabstandet zur Drehachse 4 der Antriebswelle 3 angeordnet ist, deren Drehachse durch den Kreuzungspunkt senkrecht zur Darstellungsebene verläuft. In der Darstellung von Fig. 4 ist ferner die Kontur 19 der Öffnung 17 des ersten Gehäuseteils 11 gestrichelt eingezeichnet, die einer geringfügig vergrößerten Form der Projektion des Drehkegels 2 entlang der Antriebswelle 3 entspricht und deren Rand sich entsprechend in einem bevorzugt gleichmäßigen Abstand von z.B. 1 bis 2 mm von der Außenfläche des Drehkegels 2 entfernt befindet, so dass dieser in die Öffnung 17 eingeführt werden kann, ohne den Rand der Öffnung 17 zu berühren.

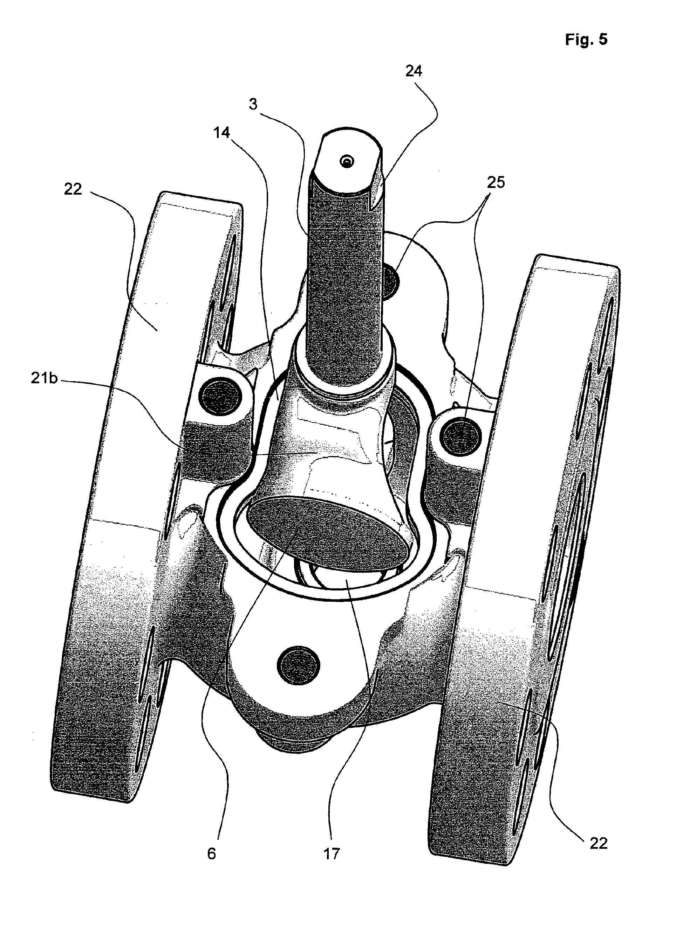

Bei der in Fig. 5 gezeigten perspektivischen Ansicht des ersten Gehäuseteils 11 ist die Baugruppe aus dem Drehkegel 2 und der daran montierten Antriebswelle 3 beim Einführen durch die Öffnung 17 in den ersten Gehäuseteil 11 dargestellt. Dieser Darstellung kann ebenfalls entnommen werden, dass die Kontur 19 der Öffnung 17 der Projektion des Drehkegels 2 entlang der Antriebswelle 3 entspricht und geringfügig größer als diese ist. Bei der bevorzugten Ausführungsform des ersten Gehäuseteils 11 ist die Öffnung 17, wie in der Darstellung von Fig. 5 gezeigt, derart ausgerichtet, dass die Mittenachse 5 des Drehkegel 2 während des Einsetzens des Zapfens 20 in die Lagerbuchse 8a senkrecht zur Strömungsrichtung des Mediums durch den ersten Gehäuseteil 11 verläuft. Nachdem der Zapfen 20 in die Lagerbuchse 8a eingesetzt ist, kann der Drehkegel 2 innerhalb des unterhalb der Öffnung 17 angeordneten und gegenüber dieser erweiterten Innenraums des ersten Gehäuseteils 11 um 90 Grad in die geschlossene Stellung verschwenkt werden, um z.B. dessen Funktionsfähigkeit zu überprüfen, bevor der zweite Gehäuseteil 12 zur Abdichtung des Gehäuses auf das freie Ende der Antriebswelle 3 aufgeschoben und mittels der Verbindungsmittel 18 mit diesem verbunden wird.

### Liste der Bezugszeichen

- 1: Gehäuse
- 2: Drehkegel
- 3: Antriebswelle
- 4: Drehachse
- 5: Mittenachse
- 6: Kalotte
- 7: Dichtfase
- 8a: Lagerbuchse
- 8b: Lagerbuchse
- 9: Formschlusselement
- 10: Stellantrieb
- 11: erstes Gehäuseteil
- 12: zweites Gehäuseteil
- 13: Sitzring
- 14: Rücksprung
- 15: Vorsprung
- 16: Dichtung
- 17: Öffnung
- 18: Verbindungsmittel
- 19: Kontur
- 20: Lagerzapfen
- 21a: Schwenkarm
- 21b: Schwenkarm
- 22: Anschlussflansch
- 22a: verdickter Abschnitt am Anschlussflansch
- 22b: verdickter Abschnitt am Anschlussflansch
- 23: Ausnehmung
- 24: Eingriffsabschnitt
- 25: Verbindungsstelle
- 26: Abstandshalter

## Patentansprüche

1. Drehkegelventil mit einem Gehäuse (1) und einem in dem Gehäuse (1) drehbeweglich angeordneten Drehkegel (2), der eine kugelkalottenförmige Oberfläche (6) aufweist, die mit einer im Gehäuse (1) angeordneten Dichtfase (7) zusammenwirkt, wobei der Drehkegel (2) durch einen Stellantrieb (10) über eine Antriebswelle (3) innerhalb des Gehäuses (1) in unterschiedliche Winkelstellungen verdrehbar ist, um den Volumenstrom eines durch das Gehäuse hindurch strömenden Mediums zu verändern, und das Gehäuse (1) einen ersten, vom Medium durchströmten Gehäuseteil (11) umfasst, der eine Öffnung (17) aufweist, durch die der mit der Antriebswelle (3) verbundene Drehkegel (2) als Einheit in den ersten Gehäuseteil (11) einführbar ist, und wobei das Gehäuse einen zweiten, die Antriebswelle (3) aufnehmenden Gehäuseteil (12) umfasst, der über Verbindungselemente (18) mit dem ersten Gehäuseteil (11) dichtend verbindbar ist und die Öffnung (17) dichtend verschließt,
**dadurch gekennzeichnet,**
**dass** die Kontur (19) der Öffnung (17) im ersten Gehäuseteil (11) der Form der Projektion des Drehkegels (2) auf eine senkrecht zur Drehachse (4) der Antriebswelle (3) verlaufende gedachte Ebene entspricht.

2. Drehkegelventil nach Anspruch 1,
**dadurch gekennzeichnet,**
**dass** der Drehkegel (2) einen ersten und zweiten daran geformten Schwenkarm (21a, 21b) aufweist, wobei der erste Schwenkarm (21b) mit der Antriebswelle (3) verbunden ist und der zweite Schwenkarm (21a) einen Lagerzapfen (20) trägt, der im ersten Gehäuseteil (11) insbesondere in einer Lagerbuchse (8a) drehbar gelagert ist.

3. Drehkegelventil nach Anspruch 2,
**dadurch gekennzeichnet,**
**dass** die Antriebswelle (3) im zweiten Gehäuseteil in einer Lagerbuchse (8b) gelagert ist, durch die das dem Stellantrieb (10) zugewandte Ende der Antriebswelle (3) beim Aufsetzen des zweiten Gehäuseteils (12) auf den ersten Gehäuseteil (11) hindurchschiebbar ist.

4. Drehkegelventil nach Anspruch 3,**dadurch gekennzeichnet,dass** die Antriebswelle (3) mit dem Stellantrieb (10) über einen Eingriffsabschnitt (24) gekoppelt ist.

5. Drehkegelventil nach einem der vorhergehenden Ansprüche,**dadurch gekennzeichnet,dass** am ersten bzw. zweiten Gehäuseteil (11, 12) im Bereich der Öffnung (17) ein umlaufender Vorsprung (15) bzw. ein mit diesem zusammenwirkender Rücksprung (14) geformt sind, die eine Zentrierpassung bilden, welche den zweiten Gehäuseteil (12) verdrehsicher relativ zum ersten Gehäuseteil (11) fixiert.

6. Drehkegelventil nach einem der vorhergehenden Ansprüche,**dadurch gekennzeichnet,**
**dass** der erste Gehäuseteil (11) Anschlussflansche (22) zur Verbindung des ersten Gehäuseteils (11) mit einem Rohrleitungssystem besitzt, und dass die Anschlussflansche (22) jeweils einen seitlich der Öffnung (17) angeordneten verdickten Bereich (22a, 22b) zur Aufnahme von Verbindungsmitteln (18), insbesondere von Schrauben oder Bolzen aufweisen, durch die der erste und zweite Gehäuseteil (11, 12) miteinander verbindbar sind.

7. Drehkegelventil nach einem der vorhergehenden Ansprüche,**dadurch gekennzeichnet,**
**dass** im ersten Gehäuseteil (11) ein mit dem Drehkegel (2) zur Abdichtung des Ventils in der geschlossenen Stellung zusammenwirkender Sitzring (13) angeordnet ist, in dem wenigstens eine Ausnehmung (23) geformt ist, über welche der Sitzring (13) mit Hilfe eines Werkzeugs durch die Öffnung (17) hindurch in den ersten Gehäuseteil (11) einsetzbar ist.

## Claims

1. Rotary plug valve with a housing (1) and a rotary plug (2), rotatably mounted in the housing (1), comprising a spherical segment-shaped surface (6) that cooperates with a sealing chamfer (7) located in the housing (1), whereby the rotary plug (2) can be rotated within the housing (1) into various angle positions by means of an actuator (10) via a drive shaft (3) in order to change the volume stream of a medium streaming through the housing, and the housing (1) comprising a first housing section (11) through which the medium streams, comprising an opening (17) through which the rotary plug (2) connected with the drive shaft (3) can be inserted into the first housing section (11) as one unit, and whereby the housing comprises a second housing section (12) for receiving the drive shaft (3), which can be sealingly connected with the first housing section (11) via the connection elements (18) and sealingly closes the opening (17),
**characterised in that**
the contour (19) of the opening (17) in the first housing section (11) equals the shape of the projection of the rotary plug (2) on an imagined plane extending vertically in relation to the axis of rotation (4) of the drive shaft (3).

2. Rotary plug valve according to claim 1,
**characterised in that**
the rotary plug (2) comprises a first and second swivel arm (21a, 21b) formed on the same, whereby the first swivel arm (21b) is connected with the drive shaft (3) and the second swivel arm (21a) supports a journal (20) that is rotatably mounted in the first housing section (11), in particular in a bearing bush (8a).

3. Rotary plug valve according to claim 2,
**characterised in that**
the drive shaft (3) is mounted in a bearing bush (8b) in the second housing section, through which the end of the drive shaft (3) facing the actuator (10) can be pushed when the second housing section (12) is positioned on the first housing section (11).

4. Rotary plug valve according to claim 3,
**characterised in that**
the drive shaft (3) is coupled with the actuator (10) via an intervention section (24).

5. Rotary valve plug according to one of the preceding claims,
**characterised in that**
a circumferential projection (15) or a recess (14) cooperating with the same, is formed on the first or the second housing section (11, 12) in the area of the opening (17), which forms a spigot fit, which rotation-preventatively fixes the second housing section (12) relative to the first housing section (11).

6. Rotary plug valve according to one of the preceding claims,
**characterised in that**
the first housing section (11) has a connection flange (22) for connecting the first housing section (11) with a pipe manifold, and **in that** the connection flange (22) has thickened areas (22a, 22b), each arranged to the side of the opening (17), for receiving connection means (18), in particular screws or bolts, with which the first and second housing sections (11, 12) can be connected with each other.

7. Rotary plug valve according to one of the preceding claims,
**characterised in that**
a seat ring (13) cooperating with the rotary plug (2) for sealing the valve in the closed position is located in the first housing section (11), in which at least one recess (23) is formed, via which the seat ring (13) can be inserted into the first housing section (11) through the opening (17) with the aid of a tool.

## Revendications

1. Soupape à cône rotatif comprenant un boîtier (1) et un cône rotatif (2) disposé de manière mobile en rotation dans le boîtier (1) et présentant une surface (6) en forme de calotte sphérique qui coopère avec un chanfrein d'étanchéité (7) agencé dans le boîtier (1), le cône rotatif (2) pouvant être tourné dans différentes positions angulaires par un servomoteur (10) par l'intermédiaire d'un arbre d'entraînement (3) à l'intérieur du boîtier (1), afin de modifier le débit volumétrique d'un fluide traversant le boîtier, et le boîtier (1) comprenant une première partie de boîtier (11) traversée par le fluide, qui comporte une ouverture (17) à travers laquelle le cône rotatif (2) relié à l'arbre d'entraînement (3) peut être introduit en tant qu'ensemble dans la première partie de boîtier (11), et le boîtier comprenant une deuxième partie de boîtier (12) recevant l'arbre d'entraînement (3), qui peut être reliée de manière étanche à la première partie de boîtier (11) par des éléments de liaison (18) et qui obture l'ouverture (17) de manière étanche,
**caractérisée en ce que** le contour (19) de l'ouverture (17) dans la première partie de boîtier (11) correspond à la forme de la projection du cône rotatif (2) sur un plan imaginaire s'étendant perpendiculairement à l'axe de rotation (4) de l'arbre d'entraînement (3).

2. Soupape à cône rotatif selon la revendication 1,
**caractérisée en ce que**
le cône rotatif (2) présente des premier et deuxième bras pivotants (21a, 21 b) formés sur celui-ci, le premier bras pivotant (21 b) étant relié à l'arbre d'entraînement (3) et le deuxième bras pivotant (21a) portant un tourillon (20) monté à rotation dans la première partie de boîtier (11) notamment dans un coussinet (8a).

3. Soupape à cône rotatif selon la revendication 2,
**caractérisée en ce que**
l'arbre d'entraînement (3) dans la deuxième partie de boîtier est monté dans un coussinet (8b), à travers lequel l'extrémité tournée vers le servomoteur (10) de l'arbre d'entraînement (3) peut passer lors de la mise en place de la deuxième partie de boîtier (12) sur la première partie de boîtier (11).

4. Soupape à cône rotatif selon la revendication 3,
**caractérisée en ce que**
l'arbre d'entraînement (3) est couplé au servomoteur (10) par une portion d'engagement (24).

5. Soupape à cône rotatif selon l'une des revendications précédentes,
**caractérisée en ce que**
sur la première resp. deuxième partie de boîtier (11, 12), au niveau de l'ouverture (17), une saillie périphérique (15) resp. un retrait (14) coopérant avec celle-ci sont formés, qui constituent un ajustement centré, lequel fixe la deuxième partie de boitier (12) sans possibilité de rotation par rapport à la première partie de boîtier (11).

6. Soupape à cône rotatif selon l'une des revendications précédentes,
**caractérisée en ce que**
la première partie de boîtier (11) possède des brides de raccordement (22) permettant de relier la première partie de boîtier (11) à un système de conduites tubulaires, et **en ce que** les brides de raccordement (22) présentent chacune une zone épaissie (22a, 22b) située sur le côté de l'ouverture (17) pour la réception de moyens de liaison (18), en particulier de vis ou de boulons, par lesquels la première et deuxième partie de boîtier (11, 12) peuvent être solidarisées entre elles.

7. Soupape à cône rotatif selon l'une des revendications précédentes,
**caractérisée en ce que**
dans la première partie de boîtier (11) une bague formant siège (13) est montée, qui coopère avec le cône rotatif (2) pour assurer l'étanchéité de la soupape en position fermée, dans laquelle au moins un évidement (23) est formé, par lequel la bague formant siège (13) peut être mise en place à l'aide d'un outil, à travers l'ouverture (17), dans la première partie de boîtier (11).
